# EUROPEAN PATENT APPLICATION

(11) **EP 4 664 678 A1**
(43) Date of publication of application: **17.12.2025**
(21) Application number: 24182302.0
(22) Date of filing: 14.06.2024
(51) Int. Cl.: H01Q 1/32, H01Q 1/42, H01Q 17/00

(54) **RADAR SENSOR**

(71) Applicant: Aptiv Technologies AG, 8200 Schaffhausen (CH)
(72) Inventor: Buitrago, Santiago, 42111 Wuppertal (DE); Raza, Bilal, 42655 Solingen (DE); Ioffe, Alexander, 53229 Bonn (DE); Stefer, Markus, 42897 Remscheid (DE)
(74) Representative: Manitz Finsterwald Patent- und Rechtsanwaltspartnerschaft mbB

(57) **Abstract**

A radar sensor comprises an antenna layer which includes an active region including at least one antenna element configured to transmit and to receive electromagnetic waves, and a passive region which is free of antenna elements and which is provided with an absorber layer for the electromagnetic waves. Protrusions are arranged at a surface of the absorber layer.

## Description

### FIELD

The present disclosure relates to a radar sensor which may be an automotive radar sensor being installed on a vehicle.

### BACKGROUND

For aerodynamic and aesthetic reasons, automotive radar sensors are usually integrated in or hidden behind other vehicle components, i.e. behind the outer shell of the vehicle. Such vehicle components may be a bumper, a facia, an emblem etc. In addition, internal components of an automotive radar sensor are usually mounted in a sensor housing on top of which a radome is placed. The housing and the radome encapsulate and protect internal sensor components from environmental factors like dust, moisture, corrosion, rust and mechanical damage.

However, if another vehicle component is placed in front of antennas of an automotive radar sensor, the performance of the radar sensor may be degraded with respect to its ideal performance. This may be due to the fact that the placement of the radar sensor behind the vehicle component, the sensor housing and the radome may entail disturbing and unwanted effects including radome insertion and transmission losses, a boresight error, antenna main lobe ripples, a shrinkage of the beam width and of the field of view of the radar sensor, an increased level of side lobes, depolarization effects and others.

Even if a radome of a radar sensor is properly designed and integrated in a vehicle, most of the above-mentioned disturbing effects may still remain e.g. due to multibounce reflections between metallic planar surfaces of the radar sensor and vehicle components. Such metallic surfaces may have a high reflectivity for electromagnetic waves and may be present within the radar sensor at a top surface of an antenna board and/or of the radome, and in addition at another vehicle component, e.g. a bumper or a facia of the vehicle.

Moreover, the reflections between metallic surfaces of the radar sensor need to be considered if a metallic waveguide antenna technology is applied to the radar sensor, e.g. air waveguide (AWG) antennas, ridge gap waveguide (RGW) antennas or groove gap waveguide (GGW) antennas. The metallic waveguide antennas have a higher efficiency and broader antenna beams in comparison to other types of antennas. However, the metallic waveguide antenna technology generally suffers from its significant structural radar cross-section (RCS) due to the highly reflective metallic planar surfaces which are present in such radar sensors. Due to this, the radar performance may be decreased. When determining the Direction of Arrival (DoA), for example, the received signals may provide large angle errors due to the multibounce reflections at the metallic surfaces of the metallic waveguide antennas.

Accordingly, there is a need to have a radar sensor for which disturbing effects are mitigated when the radar sensor is mounted behind or close to another component in a vehicle.

### SUMMARY

The present disclosure provides a radar sensor and a vehicle according to the independent claims. Embodiments are given in the subclaims, the description and the drawings.

In one aspect, the present disclosure is directed at a radar sensor comprising an antenna layer which includes an active region including at least one of antenna element configured to transmit and to receive electromagnetic waves, and a passive region which is free of antenna elements and which is provided with an absorber layer for the electromagnetic waves. Protrusions are arranged at a surface of the absorber layer.

The radar sensor may comprise different layers including, for example, a layer or a board for electronic components like an MMIC (monolithic microwave integrated circuit), a layer formed as an antenna bottom lid, the antenna layer formed as an antenna top lid and a layer formed as a radome. Within the antenna layer formed as the antenna top lid, the passive region is located which includes the absorber layer having protrusions arranged e.g. at an upper surface of the absorber layer.

The active region may include one or more antenna elements only without any further items or structures. The antenna layer may therefore just include antenna elements and the passive region including the absorber layer with the protrusions. Alternatively, structures like side bars or corrugations may be provided at the sides of the antenna element within the active region.

Moreover, the active region may not necessarily be contiguous. That is, there may be different subregions within the antenna layer which may be spatially separated from each other, and each subregion may include at least one antenna element.

The protrusions being arranged at the absorber layer may have a height greater than zero parallel to a boresight of the antenna elements. Due to the protrusions, multibounce reflections may be scattered out of a radar cone corresponding to a field of view of the radar sensor. Moreover, the surface of the absorber including the protrusions may have the ability of tuning and optimizing scattering patterns of the electromagnetic waves.

Due to the improved scattering of reflected electromagnetic waves in the passive region, specular and further multibounce reflections are reduced, and a concentration of reflected energy at boresight is decreased. Hence, a structural radar cross-section at boresight is decreased since e.g. specular multibounce reflections are deflected out of the field of view of the radar sensor.

This is important if the radar sensor is provided with air waveguide (AWG) antennas having metal surfaces which may degrade the performance of the radar sensor due to the multibounce effects, for example. Conversely, the performance of such a radar sensor having AWG antennas may be improved by the absorber layer including protrusions.

In summary, disturbing effects on the performance of the radar sensor are decreased due to the protrusions provided in the passive region, for example, if the radar sensor is installed behind a vehicle component like a facia or an emblem. As a consequence, the angle finding performance of the radar sensor is improved, i.e. when determining the Direction of Arrival (DoA), an angle error may be strongly reduced. In addition, a coverage in azimuth and elevation angles is extended, respectively, due to the reduction of the multibounce effects. This also holds true if the radar sensor is operated at different frequencies, e.g. within an entire bandwidth of 76 to 81 GHz which is currently used for automotive radar sensors, and also for frequencies beyond 100 GHz, e.g. for frequency bands around 120 GHz being relevant for advanced automotive radar sensors.

According to an embodiment, the protrusions may be arranged periodically at the surface of the absorber layer. That is, the protrusions may be arranged equidistantly in each of two directions being perpendicular to each other, wherein the distances between the protrusions in one of the two directions may differ from the distances between the protrusions in the other of the two directions. By providing such a periodic structure of protrusions at the surface of the absorber layer, the disturbing effects like multibounce scattering of electromagnetic waves may be further reduced e.g. due to the diffraction effects. Conversely, the performance of the radar sensor, e.g. regarding coverage in azimuth and elevation directions and/or regarding angle finding, may be further improved.

Moreover, the protrusions may be arranged equidistantly on top of the absorber layer. The term "equidistantly" may refer to both of two directions being perpendicular to each other. In other words, the protrusions may be arranged in such a manner that the distances between the protrusions are the same in both of these two directions. Therefore, the protrusions may have the same periodicity in both of the two directions being perpendicular to each other. The formulation "same distance" may be interpreted in the sense that such distances are almost the same, i.e. that they are equal to each other within predefined tolerances which are typically used in the field of radar antenna technology. The same periodicity of the protrusions in two directions may further reduce the disturbances and improve the performance of the radar sensor, e.g. due to diffraction effects causing destructive interference.

The protrusions may be distributed over the entire absorber layer. Such a coverage of the absorber layer by the protrusions may further improve the scattering capability of the surface structure provided for the absorber layer by arranging the protrusions thereon.

According to a further embodiment, the protrusions may include flat surfaces, and an upper surface of the protrusions may be arranged in parallel to the surface of the absorber layer. The surface of the absorber layer on which the protrusions are arranged may also be regarded as a flat base surface for the protrusions. Such a configuration of the protrusions including flat surfaces may facilitate the manufacturing of the protrusions on top of the surface of the absorber layer and therefore simplify the manufacturing of the radar sensor. In addition, the geometrical design and the arrangement of the flat surfaces of the protrusions may support the tuning capability of the absorber layer regarding a desired scattering behavior or regarding desired scattering patterns for electromagnetic waves.

According to further embodiments, the protrusions may be formed spherically, e.g. as semi-spheres, or the protrusions may have tilted surfaces which do neither extent in parallel nor perpendicularly to the surface of the absorber layer. This may also support the manufacturing of the antenna layer and extend the adaption and tuning capabilities of the antenna layer regarding desired scattering patterns provided by the protrusions.

Furthermore, the protrusions may be formed as cuboids. Hence, side surfaces of the protrusion may be arranged rectangularly with respect to an upper surface of the protrusions in order to generate one of the cuboids at the surface of the absorber layer. A lower surface of each cuboid may be connected to the absorber layer. An equidistant arrangement of cuboids as the protrusions on top of the absorber layer, i.e. a periodic arrangement of cuboids in two directions, may drastically reduce the radar cross-section in azimuth and elevation direction with respect to a reference absorber layer without protrusions, i.e. with respect to a flat absorber layer. For example, the radar cross-section at 0° regarding azimuth and elevation, i.e. the specular reflection, may be strongly reduced by the equidistantly arranged cuboids on top of the absorber layer.

In addition, a respective upper surface of the cuboids may have the same width in two directions. In other words, upper surfaces of the cuboids may be formed as squares. In the addition to having the same periodicity in two directions, the protrusions formed as cuboids may have the same dimensions with respect to the two directions which may enhance diffraction effects for reducing disturbances caused by multibounce scattering.

Furthermore, an upper surface of the cuboids may have a greater surface area than sides surfaces of the cuboids. That is, a width of the cuboids when viewed from the upper side of the absorber layer may be greater than the height of the cuboids with respect to the absorber layer. For example, the width of the cuboids in two directions or dimensions may be approximately twice as large as the height of the cuboids with respect to the absorber layer. Such dimensions of the cuboids may further reduce the disturbances caused by multibounce effects.

In addition, a respective distance between two adjacent cuboids may be equal to a width of the cuboids. This may hold true in two directions such that a regular structure may be provided on top of the absorber layer in which protrusions formed as cuboids and recesses therebetween alternate periodically with the same distances. Due to this, scattering and diffraction effects may be enhanced in order to reduce the disturbances caused by multibounce effects.

According to a further embodiment, the absorber layer may cover the entire passive region. Therefore, multiple scattering may be decreased all over the passive region being located between and around the antenna elements.

The absorber layer and the protrusions may be made of the same material. Moreover, the absorber layer may consist of electromagnetically absorbing material that improves the overall performance. However, it is not restricted to such a material and can even be made of a metal.

The absorber layer and the protrusions may be arranged on top of an antenna plane, and in a direction perpendicular to the antenna plane, a height of the protrusions may be greater than a height of the absorber layer. In other words, the thickness of the protrusions may be greater than the thickness of the absorber layer. By this means, the scattering effect provided by the protrusions may be enhanced such that the disturbances provided by multibounce effects may be further reduced.

According to a further embodiment, the radar sensor may be provided with a radome, and the absorber layer may be directly adjacent to the radome. That is, a "compound radome" can be created by combining the absorber layer with a radome. This may further reduce the multibounce effects since reflections between the antenna layer and the radome may be suppressed by the adjacent arrangement of the absorber layer and the radome. If the absorber layer is directly adjacent to the radome, the protrusions may also have a height of zero in boresight, i.e. the absorber layer may have a flat upper surface in this case. In addition, there may be no airgap between the absorber layer and the radome.

If the height of the protrusions is greater than zero parallel to boresight, the protrusions may be embedded in the radome in such a manner that the antenna layer may be free of an airgap between the absorber layer and the radome. In other words, the compound radome can be designed such that it may avoid an airgap between the radome and the absorber layer including the protrusions. By such a configuration of the radar sensor, the radar cross-section may be further decreased for the entire structure including one or more antenna layers and the radome. A height of the radome may be greater than the sum of the heights of the absorber layer and the protrusions.

According to a further embodiment, the active region of the radar sensor may include at least one air waveguide (AWG) antenna. Such a radar sensor including one or more air waveguide antennas may have a higher efficiency and broader antenna beams or lobes than other types of antennas. However, the high reflectivity associated with the metal surfaces of the air waveguide antennas may cause a performance degradation when the radar sensor is integrated behind facias or radome-emblems in a vehicle. Therefore, the absorber layer provided with the protrusions provided in the passive region between and around the antenna elements may be suitable for decreasing such a performance degradation.

In another aspect, the present disclosure is directed at a vehicle which comprises a vehicle component and a radar sensor as described above which is arranged in a vicinity of the vehicle component. The vehicle component may be a facia, a bumper or an emblem, for example.

### DRAWINGS

Exemplary embodiments and functions of the present disclosure are described herein in conjunction with the following drawings, showing schematically:
- Fig. 1: side views of a radar sensor installed in a vehicle,
- Fig. 2: a side view of an antenna layer of the radar sensor,
- Fig. 3: a top view of the antenna layer as shown in Fig. 2, and
- Fig. 4: a further side view of an antenna layer including an absorber layer covered by a radome.

### DETAILED DESCRIPTION

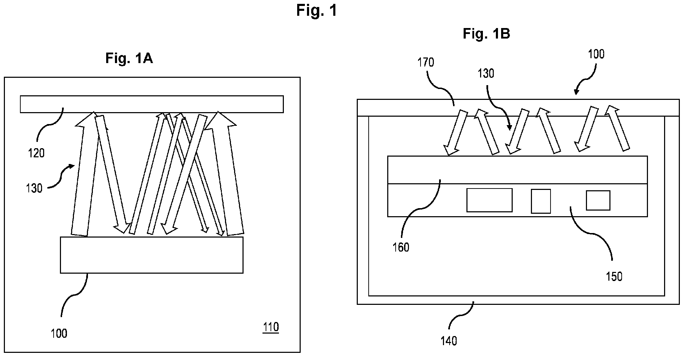

Fig. 1A schematically depicts a radar sensor 100 which is installed in a vehicle 110 behind a vehicle component 120, e.g. a bumper, a facia or a radome-emblem of the vehicle 110. Automotive radar sensors like the radar sensor 100 are generally located behind an outer shell of the vehicle 110 for aesthetic and aerodynamic reasons.

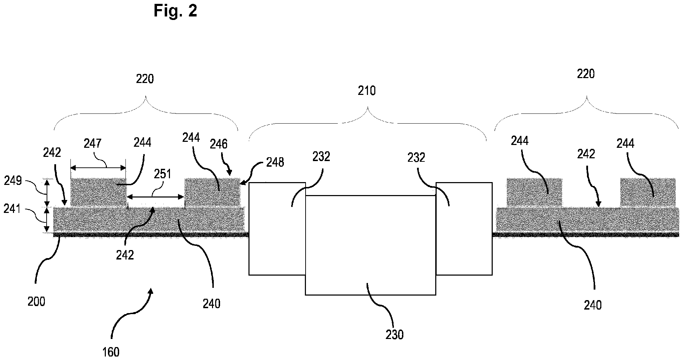

In Fig. 1B, an enlarged side view of the radar sensor 100 is depicted. The radar sensor 100 includes a housing 140 in which different boards or layers 150, 160 of the radar sensor 100 are mounted as internal components. These include a board 150 for electronic components like a monolithic microwave integrated circuit (MMIC) and one or more boards or layers 160 for air waveguide (AWG) antennas. These antenna layers 160 may include an antenna bottom lid or bottom layer and an antenna top lid or top layer, wherein the latter one is shown in Figs. 2 to 4 and discussed in detail below.

In addition, the radar sensor 100 includes a radome 170. The housing 140 and the radome 170 encapsulate and protect the internal components like the boards or layers 150, 160 of the radar sensor 100 from environmental factors like dust, moisture, corrosion, rust and mechanical damages.

The surfaces of the vehicle component 120 and of some boards or layers of the radar sensor 100 are formed as metallic planar surfaces. Therefore, these surfaces have a high reflectivity for radar waves being transmitted by the sensor 100. Due to this, specular multibounce reflections occur which are illustrated by the arrows denoted by 130 in Figs. 1A and 1B. The specular multibounce reflections 130 may be present between the radar sensor 100 and the vehicle component 120. In addition, the specular multibounce reflections 130 may also be present between the planar metallic surfaces of the radome 170 and the upper antenna layer or board 160 including the AWG antennas. The reflections 130 are accompanied by unwanted disturbing effects for the performance of the radar sensor 100, such as radome insertion and transmission losses, a boresight error, antenna main lobe ripples, a shrinkage of the beam width and the field of view of the radar sensor 100, increased side-lobe levels and depolarization effects, for example.

Even if the radome 170 is properly designed and mounted for minimizing such unwanted disturbing effects, a majority of these disturbing effects may remain due to the specular reflections. Therefore, the radar sensor 100 according to the disclosure is configured to reduce such disturbing effects as far as possible.

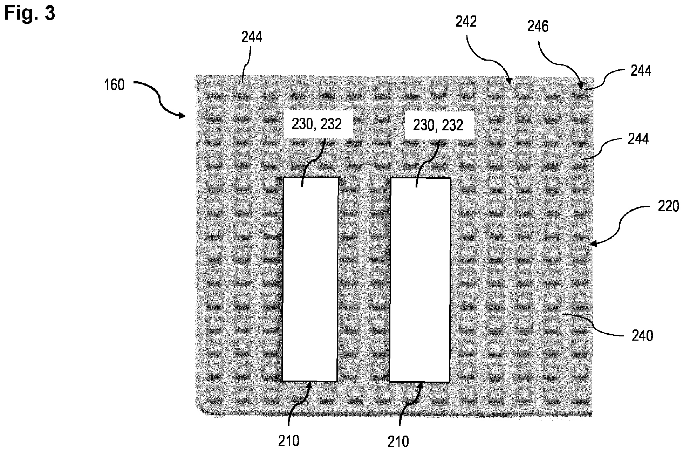

Fig. 2 schematically depicts a side view of the antenna layer 160 of the radar sensor 100 according to a first embodiment, whereas Fig. 3 schematically depicts a corresponding plane view of the antenna layer 160. At an antenna plane 200, the antenna layer 160 includes an active region 210 and a passive region 220. The active region 210 includes a plurality of antenna elements 230 which are configured to transmit and to receive electromagnetic waves. In detail, the antenna elements 230 are configured as air wave guide (AWG) antennas. The active region further includes side elements 232 which are associated with a respective antenna element 230 and which are disposed on both sides of the associated antenna element 230.

As can be seen in Fig. 3, the active region 210 is not necessarily contiguous and may include a plurality of subregions, i.e. two subregions in the example of Fig. 3, which are spatially separated from each other. Each subregion of the active region 210 includes one of the antenna elements 230 and may further include respective side elements 232 as shown in Fig. 2.

The passive region 220 includes an absorber layer 240 which is located on top of the antenna plane 200 and which covers the entire passive region 220 (see Fig. 3). On top of the absorber layer 240, i.e. at an upper surface 242 of the absorber layer 240, protrusions 244 are arranged which are formed as cuboids. As can be seen in Fig. 3, the protrusions or cuboids 244 also cover the entire passive region 220 and the entire absorber layer 240 as a regular pattern. That is, the cuboids 244 are periodically and equidistantly arranged at the upper surface 242 of the absorber layer 240. Hence, the cuboids 244 have the same periodicity in two directions which are perpendicular to each other, wherein one of these directions is aligned with or even the same as the direction in which the antenna elements 230 and the side elements 232 extend within the active region 210.

The cuboids 244 have a respective upper surface 246 which extends in parallel to the upper surface 242 of the absorber layer 240 and in parallel to the antenna plane 200, i.e. in a direction perpendicular to the boresight of the antenna elements 230. The upper surface 246 of the cuboids 244 has the same width 247 in both directions such that the upper surface 246 of the cuboids 244 is formed as a square. In addition, a respective shortest distance 251 between the cuboids 244 is approximately equal to the width 247 of the upper surface 246 of the cuboids 244. Therefore, the cuboids 244 form a very regular pattern on top of the absorber layer 240 (see Fig. 3). The distances 241, 247, 249, 251 and 253 mentioned above or below are to be understood as provided within tolerances which are typically used within the field of radar antenna technology. For example, the width 247 of the upper surface 246 of the cuboids 244 in both directions and the distance 251 between the cuboids 244 may be approximately the same within such tolerances.

Side surfaces 248 of the cuboids 244 have a height 249 in a direction perpendicular to the antenna plane, i.e. in a direction parallel to the boresight of the antenna element 230, wherein the respective width 247 of the upper surface 246 of the cuboids 244 is greater than and approximately twice as large as the height 249 of the cuboids 244. Accordingly, the respective upper surface 246 of the cuboids 244 has a greater surface area than the side surfaces 248 of the cuboids 244.

Moreover, the absorber layer 240 has a height or thickness 241 in the direction perpendicular to the antenna plane 200 and parallel to the boresight of the antenna element 230, wherein the height 249 of the cuboids 244 is greater than the height 241 of the absorber layer 240, for example by a factor of more than 3, although this is not drawn to scale in Fig. 2.

The absorber layer 240 and the cuboids 244 are made of the same material which has a dielectric permittivity of at least 10, e.g. of approximately 10.2. In addition, the absorber layer 240 can be regarded as a perfectly electric conducting (PEC) plate.

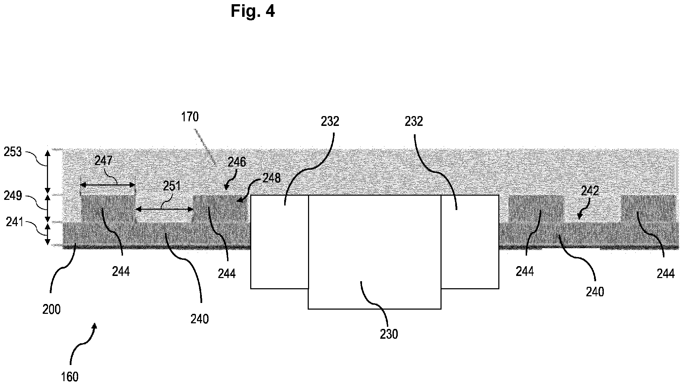

Fig. 4 schematically depicts a second embodiment of the antenna layer 160 of the radar sensor 100. The second embodiment as shown in Fig. 4 differs from the first embodiment as shown in Figs. 2 and 3 only in that the antenna layer 160 is covered by a radome 170 such that the protrusions or cuboids 244 are embedded in the radome 170. Apart from that, the description as provided above for the first embodiment as shown in Figs. 2 and 3 is also valid for the second embodiment as shown in Fig. 4.

For the second embodiment, the width 247 of the respective upper surface 246 of the cuboids and the shortest distance 251 between the cuboids 244 are also almost identical. The width 247 of the cuboids 244 is again approximately twice as large as the height 249 of the side surfaces 248.

Moreover, the height or thickness 241 of the absorber layer 240 is almost as large as the height of the cuboids 244 for the second embodiment. A height 253 of the radome 170 above the cuboids 244 in the boresight of the antenna elements 230 is greater than the sum of the respective heights 241, 249 of the absorber layer 240 and of the cuboids 244.

For the second embodiment, the absorber layer 240 and the cuboids 244 are also made of the same material which has a dielectric permittivity of at least 10, e.g. of approximately 10.2. In contrast, the dielectric permittivity of the radome is approximately 2.5 and therefore much smaller the dielectric permittivity of the absorber layer 240.

Due to the cuboids 244 being arranged at the upper surface 242 of the absorber layer 240, reflections of electromagnetic waves transmitted by the antenna elements 230 are not only mitigated due to absorption, but in addition, the electromagnetic waves and their energy are scattered due to the geometrical arrangement of the cuboids 244. The electromagnetic waves are scattered at the different upper and side surfaces of the cuboids such that they do not reach the receiving (RX) elements among the plurality of antenna elements 230. It is observed that the reflectivity of the antenna layers 160 according to the first and second embodiments is significantly decreased in comparison to a radar sensor including a flat reference plate as an absorber layer, i.e. without the protrusions or cuboids 244. Such a flat reference plate may be regarded as a as a perfectly electric conducting (PEC) plate.

In order to investigate the effect of the cuboids 244 on top of the absorber layer 240, the radar cross-section was simulated for the first and second embodiment as shown in Figs. 2 and 4, respectively, with respect to the radar cross-section of a reference radar sensor including a flat PEC plate. The respective radar cross-section was been determined depending from the azimuth angle and from the elevation angle with respect to the boresight of the antenna elements 230. The simulations resulted in a strong reduction of the radar cross-section for both of the azimuth angle and the elevation angle in a range of ±20° around an absolute value of 0°. In detail, a reduction of 21.03 dB was achieved for the first embodiment as shown in Figs. 2 and 3 at boresight, whereas a reduction of 19.36 dB was achieved for the second embodiment as shown in Fig. 4.

Moreover, the radar performance of the radar sensor 100 including the antenna layers 160 according to the first and second embodiments was simulated when being arranged behind a high reflectivity facia. The considered facia had a curvature radius of 1500 mm, a relative tilt angle of 0° in the horizontal axis and a relative tilt angle of 6° in the vertical axis. Moreover, the facia was based on a plastic layer with a dielectric permittivity of 2.39, a tanδ of 0.01 and a thickness of 3.02 mm. In addition, the facia was provided with a paint layer having dielectric permittivity of 10, tanδ = 0.01 and a thickness of 0.1 mm. In comparison to the reference sensor having a flat PEC plate, an angle error was strongly reduced for the first and second embodiments as shown in Figs. 2 to 4 when determining the direction of arrival (DoA) of the different signals, i.e. of the electromagnetic waves transmitted and received by the antenna element 230.

Due to the reduction of the surface reflections as described above, the coverage by the electromagnetic waves in azimuth and elevation direction can also be strongly enlarged. Details are explicitly indicated in table 1 below in which the azimuth coverage and the elevation coverage are provided as percentage for the reference sensor including a flat reference surface, for the radar sensor 100 including the antenna layer 160 according to the first embodiment (see Figs. 2 and 3) and for the radar sensor 100 including the antenna layer 160 according to the second embodiment having the cuboids 244 embedded in the radome 170 (see Fig. 4). For both embodiments, a relative enhancement of the coverage of approximately 20% is achieved for the azimuth direction, whereas a relative enhancement of the coverage of approximately 50% is achieved for the elevation direction.

**Table 1**

| | Azimuth Coverage | Elevation Coverage |
|---|---|---|
| Reference sensor | 75.77% | 56.07% |
| 1^{st} embodiment (Figs. 2 and 3) | 91.57% | 85.06% |
| 2^{nd} embodiment (Fig. 4) | 92.76% | 84.93% |

According to the disclosure, a radar sensor may comprise an antenna layer which may include an active region including at least one antenna element configured to transmit and to receive electromagnetic waves, and a passive region which may be free of antenna elements and which may be provided with an absorber layer for the electromagnetic waves. Protrusions may be arranged at a surface of the absorber layer.

According to various embodiments, the protrusions may be arranged periodically at the surface of the absorber layer.

According to various embodiments, the protrusions may be arranged equidistantly on top of the absorber layer.

According to various embodiments, the protrusions may be distributed over the entire absorber layer.

According to various embodiments, the protrusions may include flat surfaces, and an upper surface of the protrusions may be arranged in parallel to the surface of the absorber layer.

According to various embodiments, the protrusions may be formed as cuboids.

According to various embodiments, a respective upper surface of the cuboids may have the same width in two directions.

According to various embodiments, an upper surface of the cuboids may have a greater surface area than respective sides surfaces of the cuboids.

According to various embodiments, a respective distance between two adjacent cuboids may be equal to a width of the cuboids.

According to various embodiments, the absorber layer may cover the entire passive region.

According to various embodiments, the absorber layer and the protrusions may be made of the same material.

According to various embodiments, the absorber layer and the protrusions may be arranged on top of an antenna plane, and in a direction perpendicular to the antenna plane, a height of the protrusions may be greater than a height of the absorber layer.

According to various embodiments, the radar sensor may be provided with a radome, and the absorber layer may be directly adjacent to the radome.

According to various embodiments, the protrusions may be embedded in the radome such that the antenna layer is free of an airgap between the absorber layer and the radome.

According to various embodiments, the active region of the radar sensor may include at least one air waveguide antenna.

Furthermore, a vehicle may comprise a vehicle component and a radar sensor as described above which may be arranged in a vicinity of the vehicle component.

### Reference numeral list

- 100: radar sensor
- 110: vehicle
- 120: vehicle component, e.g. facia or bumper
- 130: specular multibounce reflections
- 140: housing
- 150: electronic board
- 160: antenna layer
- 170: radome
- 200: antenna plane
- 210: active region
- 220: passive region
- 230: antenna element, AWG antenna
- 232: side element
- 240: absorber layer
- 241: height of absorber layer
- 242: upper surface of the absorber layer
- 244: protrusion, cuboid
- 246: upper surface of the cuboid
- 247: width of the upper surface of the cuboid
- 248: side surface of the cuboid
- 249: height of the cuboid
- 251: minimum distance between the cuboids
- 253: height of radome above the cuboids

## Claims

1. Radar sensor (100), comprising:
an antenna layer (160) which includes:
an active region (210) including at least one antenna element (230) configured to transmit and to receive electromagnetic waves, and
a passive region (220) which is free of antenna elements (230) and which is provided with an absorber layer (240) for the electromagnetic waves,
wherein protrusions (244) are arranged at a surface (242) of the absorber layer (240).

2. Radar sensor (100) according to claim 1, wherein
the protrusions (244) are periodically arranged at the surface (242) of the absorber layer (240).

3. Radar sensor (100) according to claim 1 or 2, wherein
the protrusions (244) are equidistantly arranged on top of the absorber layer (240).

4. Radar sensor (100) according to any one of claims 1 to 3, wherein
the protrusions (244) are distributed over the entire absorber layer (240).

5. Radar sensor (100) according to any one of claims 1 to 4, wherein
the protrusions (244) include flat surfaces (246, 248), and
an upper surface (246) of the protrusions (244) is arranged in parallel to the surface (244) of the absorber layer (240).

6. Radar sensor (100) according to any one of claims 1 to 5, wherein
the protrusions (244) are formed as cuboids.

7. Radar sensor (100) according to claim 6, wherein
a respective upper surface (246) of the cuboids (244) has the same width in two directions.

8. Radar sensor (100) according to claim 6 or 7, wherein
an upper surface (246) of the cuboids (244) has a greater surface area than respective sides surfaces (248) of the cuboids (244).

9. Radar sensor (100) according to any one of claims 6 to 8, wherein
a respective distance between two adjacent cuboids (244) is equal to a width of the cuboids (244).

10. Radar sensor (100) according to any one of claims 1 to 9, wherein
the absorber layer (240) covers the entire passive region (220).

11. Radar sensor (100) according to any one of claims 1 to 10, wherein
the absorber layer (240) and the protrusions (244) are arranged on top of an antenna plane (200), and
in a direction perpendicular to the antenna plane (200), a height of the protrusions (244) is greater than a height of the absorber layer (240).

12. Radar sensor (100) according to any one of claims 1 to 11, wherein
the radar sensor (100) is provided with a radome (170), and
the absorber layer (240) is directly adjacent to the radome (170).

13. Radar sensor (100) according to claim 12, wherein
the protrusions (244) are embedded in the radome (170) such that the antenna layer is free of an airgap between the absorber layer (240) and the radome (170).

14. Radar sensor (100) according to any one of claims 1 to 13, wherein
the active region (210) of the radar sensor (100) includes at least one air waveguide antenna (230).

15. Vehicle (110), comprising:
a vehicle component (120) and
a radar sensor (100) according to any one of claims 1 to 14 which is arranged in a vicinity of the vehicle component (120).
